# EUROPÄISCHE PATENTSCHRIFT

(11) **EP 1 380 083 B1**
(45) Veröffentlichungstag und Bekanntmachung des Hinweises auf die Patenterteilung: **26.04.2006**
(21) Anmeldenummer: 02716812.9
(22) Anmeldetag: 26.02.2002
(51) Int. Cl.: H02B 13/00

(54) **ELEKTRISCHE SCHALTANLAGE**
ELECTRIC SWITCHING SYSTEM
DISPOSITIF DE COMMUTATION ELECTRIQUE

(30) Priorität: 20.04.2001 DE 10119333
(43) Veröffentlichungstag der Anmeldung: 14.01.2004
(73) Patentinhaber: Ormazabal Anlagentechnik GmbH, 47804 Krefeld (DE)
(72) Erfinder: DIRKS, Rolf, 47877 Willich (DE); KURRAT, Michael, 38116 Braunschweig (DE); HEISTER, Heinz, 47829 Krefeld (DE)
(74) Vertreter: Cohausz & Florack
(86) Internationale Anmeldenummer: PCT/EP2002/002009
(87) Internationale Veröffentlichungsnummer: WO 2002/087042

(56) Entgegenhaltungen:
- EP-A- 0 520 933
- EP-A- 0 891 013

## Beschreibung

Die Erfindung betrifft eine elektrische Schaltanlage, insbesondere für Mittelspannung nach dem Oberbegriff des Hauptanspruchs.

Die EP-A1-0 520 933 und EP-A1-0 891 013 beschrieben jeweils eine derartige elektrische Schaltanlage.

Die Schaltanlage soll mit einer Sammelschienenkupplung durch benachbarte Schaltfeldwände zweier nebeneinander stehender Schaltfelder ausgerüstet werden. Aus der Druckschrift WO 9740563 A1 ist eine Sammelschienenkupplung bekannt.

Bei dieser Sammelschienenkupplung sind die Isolierkörper für jede Phase auf massiven Metalleinlagen unlösbar aufgebracht. Weiterhin sind die Metalleinlagen in den Öffnungen der Schaltfeldwände eingeschweißt. Das Trennen der Schaltfelder und das Verschließen der Öffnungen für eine anderweitige Verwendung eines Schaltfeldes ist nur möglich, wenn die aufwendig angeschweißten Metalleinlagen abgetrennt werden. Bei dieser Konstruktion ist auch nicht vorgesehen, dass die Schaltfelder getrennt und die Wandöffnungen anschließend verschlossen werden können.

Problematisch an einer solchen Sammelschienenkupplung ist weiterhin die Feldsteuerung in der Nähe der Ränder der Öffnungen in den Schaltfeldwänden. Insbesondere können die Schaltfelder nicht beliebig nahe aneinander gerückt werden, bzw. die Öffnungen in den Schaltfeldwänden nicht besonders klein gestaltet werden. Wenn die auf Erdpotential liegenden Ränder der Öffnungen an die elektrische Verbindung heranrücken, erhöht sich die elektrische Feldstärke in diesem Bereich und kann kritische Werte erreichen. Zur Vermeidung dieser Probleme ist die vorgenannte Sammelschienenkupplung in sehr langen Baumaßen ausgeführt, wodurch viel Raum in beiden Schaltfeldem eingenommen wird.

Der Erfindung liegt daher die Aufgabe zugrunde, eine verbesserte Sammelschienenkupplung anzugeben, die einfach an den Schaltfeldwänden zu befestigen ist, eine sichere Feldsteuerung umfaßt und kurzbauend ausgeführt ist. Für den Nichtgebrauch der Sammelschienenkupplung soll eine Verschlußanordnung vorgesehen sein.

Ausgehend von der im Oberbegriff des Hauptanspruchs genannten Schaltanlage wird die Aufgabe erfindungsgemäß durch die kennzeichnenden Merkmale des unabhängigen Anspruches gelöst, während den abhängigen Ansprüchen vorteilhafte Weiterbildungen der Erfindung zu entnehmen sind.

Der Kern der Erfindung liegt darin, daß der Isolierkörper für die Aufnahme eines Dichtkörpers (je Phase) für eine Kupplung oder für die Aufnahme eines Verschlusskörpers für den Nichtgebrauch einer Kupplung besonders ausgebildet wird. Im folgenden soll einheitlich - wenn nicht anders angegeben - der Begriff Verschlusskörper verwendet werden.

Der Isolierkörper, der Dichtkörper und der Verschlußkörper sind sehr kurz gebaut. Damit ist ein sehr geringer Abstand zwischen benachbarten Schaltfeldern möglich, der fast allein vom Überstand der Befestigungsschrauben bestimmt ist. Um auszuschließen, daß die Länge der Befestigungsschrauben stört, kann vorgesehen sein, daß die Befestigungsbohrungen an verschiedenen Schaltfeldwänden gegeneinander verdreht angeordnet sind. Wegen der kurzen Baulänge in den Innenraum hinein, wird weiterhin wenig Innenraum beansprucht. Die kurze Baulänge führt damit zu einer sehr wirtschaftlichen Lösung.

Ein weiterer Vorteil liegt darin, dass ohne aufwendige Umbaumaßnahmen zu einem späteren Zeitpunkt eine ungekuppelte Schaltanlage erweitert oder eine gekuppelte Schaltanlage abgetrennt und verschlossen werden kann. Es reicht ein Wechsel des erfindungsgemäßen Dichtkörpers gegen den ebenfalls beanspruchten Verschlußkörper oder umgekehrt aus.

In weiterführenden Ausführungen sind noch folgende Merkmale einzeln oder auch in Kombination von Bedeutung.

Der Dicht- als auch der Verschlußkörper bestehen aus Isoliermaterial und trägt eine Leitbeschichtung, die im weiteren als innere Leitbeschichtung bezeichnet wird. Die innere Leitbeschichtung reicht ausreichend tief in die Dichtspalte des Isolierkörpers hinein, so daß die Berührungspunkte mit dem Isolierkörper bedeckt ist. Die Leitbeschichtungen bestehen vorzugsweise aus Sitikon-Kautschuk-Leitlack, der als Spray auftragbar ist und bei der Herstellung des Grundkörpers mitvulkanisiert wird.

Der Isolierkörper hat eine Dichtspalte, die den schaltfeldseitigen Rand des rohrförmigen Dichtkörpers bzw. des becherförmigen Verschlußkörpers aufnimmt. Der Rand wird möglichst tief in die Dichtspalte eingepreßt. Der Rand ist mit Leitschicht belegt, so dass auch bei einem möglicherweise vorhandenen Hohlraum in der Tiefe der Dichtspalte dieser Hohlraum vollständig mit Leitmaterial umschlossen ist. Damit steht jeder Punkt der Tiefe der Dichtspalte mit Sicherheit auf nur einem Spannungspotential. Eine Strecke ohne Leitbeschichtung ist zwischen der inneren und der äußeren Leitbeschichtung vorhanden

Eine äußere Leitbeschichtung kann am Dichtkörper und am Verschlußkörper vorhanden sein.

Der Dichtkörper besitzt eine äußere umlaufende Krempe, die in den Raum zwischen den Schaltfeldwänden hineinragt. Die äußere Leitbeschichtung ist an der Krempe ausgebildet und reicht etwa bis zur Hälfte der Strecke zwischen Schaltfeldwand und der Ringelektrode.
Die äußere Leitbeschichtung steht in Kontakt mit Erdpotential. Die Elektrode ist vorzugsweise ringförmig ausgebildet, da der Isolierkörper rotationssymmetrisch und die Schaltfeldwandöffnung in der Regel kreisrund ausgebildet ist.

Die in den Isolierkörper integrierten Befestigungsmittel sind als metallische Hülsen mit Innengewinde gestaltet, in die metallische Befestigungsschrauben zur Befestigung mit der Schaltfeldwand eingreifen.

Im Isolierkörper ist mit Abstand zur Schaltfeldwandöffnung eine die Schaltfeldwand (die auf Erdpotential liegt) kontaktierende Elektrode angeordnet, die der Potentialsteuerung zwischen den Kontaktstücken und der (nah herangeführten Kante der) SchaltfeldwandÖffnung dient. Die Elektrode ist als geschlossener Ring (vorzugsweise als Stahldraht) ausgebildet, der mit den Hülsen in Berührung steht.

Der Ring wird bei der Herstellung des Isolierkörpers (vorzugsweise aus Gießharz) in an den Hülsen vorhandenen Nuten eingeclipst, wodurch eine gegenseitige Fixierung und Stabilisierung stattfindet (zumindest für die Zeit des Abbindens des Gießharzes). Der Ring kontaktiert über die Hülsen und die Befestigungsschrauben mit dem Erdpotential der Schaltfeldwand.

Der Dichtkörper ist mit einem umlaufenden gegen den Kupplungsbolzen gerichteten Ring versehen, der den Kupplungsbolzen fest umschließt und bei der Montage als Zentrierhilfe dient.

Die innere Leitbeschichtung ist am Ring des Dichtkörpers bis hin zum schaltfeldseitigen Rand, also bis in die Dichtspalte hinein, ausgebildet.

Der Kupplungsbolzen verläuft außen an beiden Enden konisch (mit langen Anschrägungen). Damit werden die Fügekräfte gering gehalten.

In den topfförmigen Isolierkörper ist eine Nut für eine O-Ring-Dichtung gegen die Schaltfeldwand eingeformt, sowie eine Wulst, die zur Zentrierung in die Bohrung der Schaltfeldwände dient.

Die für einen Isolierkörper bestimmten Befestigungsbohrungen in einer Schaltfeldwand sollten in Bezug zur benachbarten Schaltfeldwand der zweiten Schaltanlage derart verdreht angeordnet sein, dass die Befestigungsschrauben nicht zueinander fluchten. Damit wird ein geringerer Abstand der Schaltfeldwände zueinander ermöglicht, weil die Schraubenköpfe nicht gegeneinander stoßen.

Die Verschraubung der Schaltfeldwände, mit der die Schaltfelder zueinander festgelegt werden, erfolgt über nicht gezeigte Verbindungselemente in üblicher Weise. Wesentlich hierbei ist jedoch, daß mit der Verschraubung ein geradliniges Aufeinanderzubewegen der Schaltfeldwände erreicht wird, was insbesondere für die verkantungsfreie Kontaktierung aller drei Phasen der Sammelschienenkupplung notwendig ist. Außerdem sollte sichergestellt sein, daß die Verschraubung zu einem definierten Abstand, auch bei paralleler Lage der Schaltfeldwände führt. Hierzu sind geeignet gewählte und angeordnete Abstandshalter oder Distanzstücke vorzusehen, die der Fachmann jedoch leicht anbringen kann.

Der Verschlußkörper muß mit Befestigungsmitteln an der Schaltfeldwand anbringbar sein. Hierbei soll ein definierter Einpressdruck des Verschlußkörpers in die Dichtspalte des Körpers erzielt werden können. Hierzu wird ein Haltedeckel vorgesehen, der an den Verschlußkörper auflegbar ist und mit dem ein erforderlicher Anpreßdruck erreichbar ist. Der Haltedeckel kann indirekt an die Befestigungsmittel im Isolierkörper montierbar sein.

Vorzugsweise ist der Verschlußkörper schaltfeldfern mit einem Außenrand versehen, der zur Auflage des Haltedeckels dient.

Die Außenfläche des Verschlußkörpers kann mit einer Elektrode für eine kapazitive Meßanordnung bedeckt sein. Weiterhin kann in den Haltedeckel die kapazitive Meßanordnung integriert sein.

Der Haltedeckel für die Meßanordnung sollte feuchtedicht aufgebracht sein und einen Federkontakt für die Meßanordnung tragen, der zentrisch die Elektrode kontaktiert.

Weitere Einzelheiten und Vorteile der Erfindung ergeben sich aus den folgenden, anhand von Figuren erläuterten Ausführungsbeispielen. Es zeigen im Einzelnen
Fig. 1 Schnittdarstellung durch eine Anlagen-Kupplung mit einem Dichtkörper,
Fig. 2 einen ersten Verschlußkörper mit Haltedeckel,
Fig. 3 den ersten Verschlußkörper mit Leitbeschichtung,
Fig. 4 einen zweiten Verschlußkörper mit Meßsystem,
Fig. 5 die Anordnung der Befestigung des Haltedeckels und
Fig. 6 drei Ansichten einer mit Haltedeckel abgedeckten Anordnung

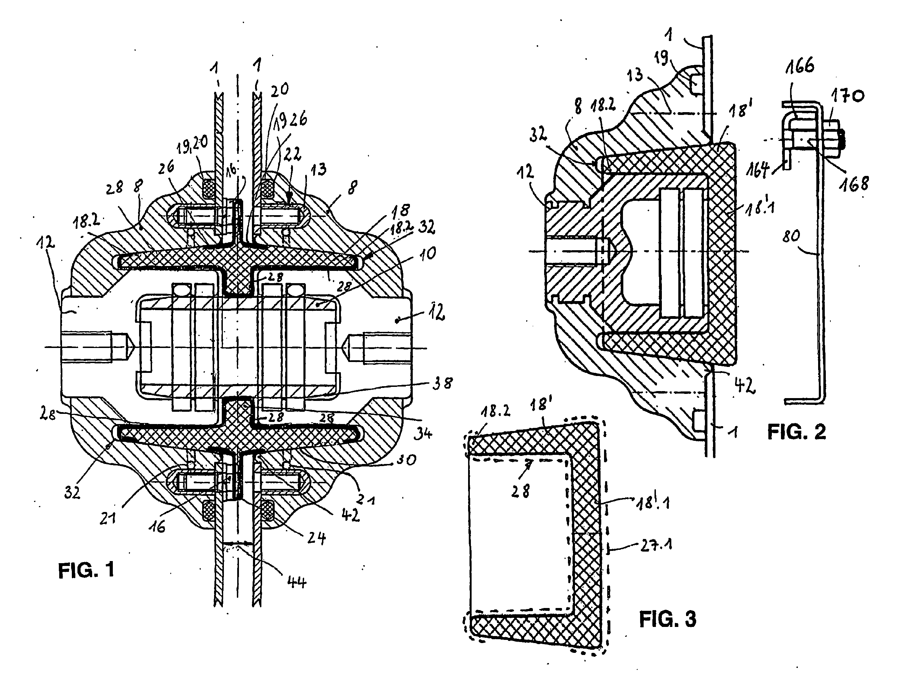

Die Figur 1 zeigt einen Schnitt durch die Sammelschienenkupplung einer Phase zwischen den Schaltfeldwänden 1 zweier nebeneinander stehender Schaltfelder einer Schaltanlage für Mittelspannung.

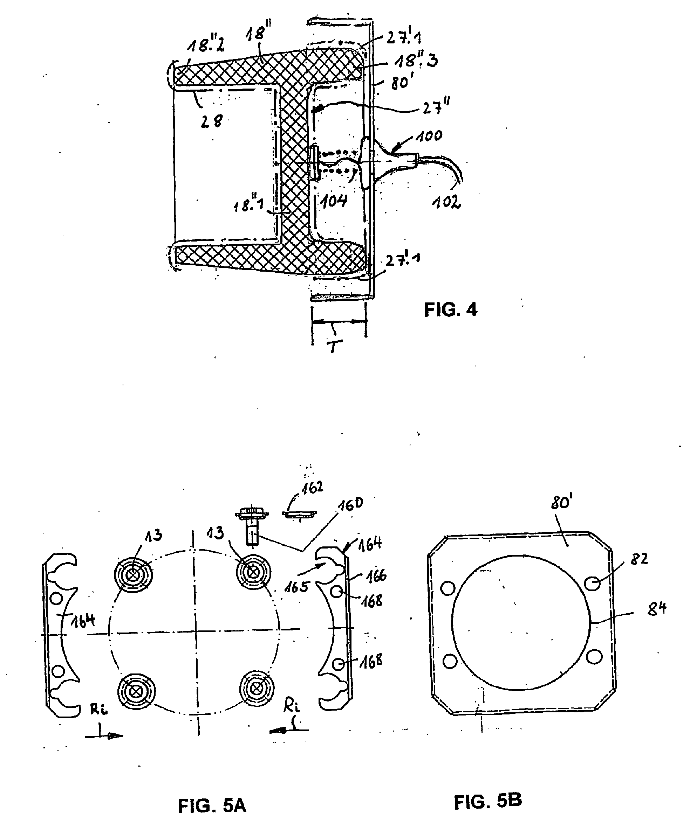

Der Isolierkörper 8 ist topfförmig, rotationssymmetrisch ausgebildet und in ihm sind mindestens zwei Befestigungsmittel 13 integriert, die als metallische Hülsen mit Innengewinde (Eingießgewinde) ausgebildet sind. In die Innengewinde werden Schrauben 16 (oder solche (160) mit Kragenhülse 162, wie in Fig. 5A dargestellt) eingeschraubt, die den Isolierkörper an der Schaltfeldwand 1 befestigen. Der Isolierkörper 8 ist aus Gießharz hergestellt, wobei der Isolierkörper direkt um das Kontaktstück 12 herum vergossen wird und somit einen einstückigen Körper bildet.

Die elektrische Verbindung wird über einen innerhalb der Topfform beider Isolierkörper 8 befindlichen metallischen Kupplungsbolzen 10 und über in den Isolierkörpern 8 befindliche Kontaktstücke 12 vermittelt. Der nichtleitende Dichtkörper 18 umschließt den Kupplungsbolzen 10.

Der Dichtkörper 18, wie auch die weiter unten beschriebenen Verschlußkörper sind vorzugsweise aus Silikonkautschuk hergestellt. Sie tragen auf der Oberfläche eine Leitbeschichtung, vorzugsweise aus Leitlack mit einer Dicke von 0,1 mm. Es handelt sich um die innere 28 und die äußere 26 (auch 27) Leitbeschichtung. Erstere erstreckt sich bis zum schaltfeldseitigen Rand 18.2 des Dichtkörpers und umläuft noch die Ränder ein kleines Stück (wie die Figur 1 ausweist). Der Rand 18.2 liegt in der Dichtspalte 32 des Isolierkörpers eng eingepreßt. Der Leitlack ist als Silikonspray aus halbleitendem Material aufgetragen und zusammen mit dem Dicht- oder Verschlußkörper vulkanisiert.

Der Dichtkörper 18 hat eine äußere umlaufende dünne Krempe 24, die in den Raum 44 zwischen den Schaltfeldwänden 1 hineinragt. Die Krempe ist sehr flexibel und verformt sich beim Zusammenbau mäanderförmig zwischen den Befestigungsschrauben 16. Die Krempe 24 ist mit der äußeren Leitschicht 26 belegt, damit kontaktiert sie mit dem Erdpotential beider Schaltfeldwände.

Auf der Innenseite des Dichtkörpers ist mittig ein nach innen ragender, umlaufender Ring 34 vorhanden. Der Ring umschließt den Kupplungsbolzen 10 fest und dient bei der Montage als Zentrierhilfe. Auf dem Ring liegt ebenfalls die innere Leitbeschichtung 28 an, die dort mit dem Kupplungsbolzen kontaktiert.

Im Isolierkörper 8 ist eine Nut 19 für eine O-Ring-Dichtung 20 gegen die Schaltfeldwand 1 eingeformt, sowie eine Wulst 42, die zur Zentrierung in die Öffnung der Schaltfeldwand 1 dient.

Die Elektrode 21 ist als geschlossener Ring (vorzugsweise als Stahldraht) ausgebildet, der mit den Hülsen 13 in Berührung steht. Der Ring 21 wird bei der Herstellung des Isolierkörpers 8 in an den Hülsen vorhandenen Nuten eingeclipst, wodurch eine gegenseitige Fixierung und Stabilisierung stattfindet. Der Ring 21 kontaktiert über die Hülsen 13 und die Befestigungsschrauben 16 mit dem Erdpotential der Schaltfeldwand 1.

In Fig. 2 wird ein erster, ebenfalls rotationssymmetrischer Verschlußkörper 18' gezeigt, der in den Isolierkörper 8 einsetzbar ist. Es sind keine Änderungen am Isolierkörper 8 notwendig. Der Isolierkörper kann sowohl alle Bau-Elemente einer Kupplung und als diejenigen Elemente für einen Verschluß aufnehmen.

Der erste Verschlußkörper 18' hat Becherform mit einem nach außen gerichteten, flachen Becherboden 18'.1. Der zur Schaltfeldinnenseite gerichtete Becherrand 18.2 ist identisch wie der Rand des Dichtkörpers 18 ausgebildet. Die Höhe des Verschlußkörpers 18' ist in Bezug auf die Tiefe der Dichtspalte 32 so bemessen, dass der Verschlußkörper 18' über die durch die Schaltfeldwand 1 gebildete Fläche hinaussteht. Der flache Becherboden 18'.1 ist mit einer Leitbeschichtung 27.1 versehen (siehe Fig. 3), auf der ein Anpreß- oder Haltedeckel 80 zum Liegen kommt und zur eindeutigen Potential-Aussteuerung gegen das Erdpotential der Schaltfeldwand 1 beiträgt. Die Leitbeschichtung 28 des ersten Verschlußkörpers kontaktiert mit dem Kontaktstück 12.

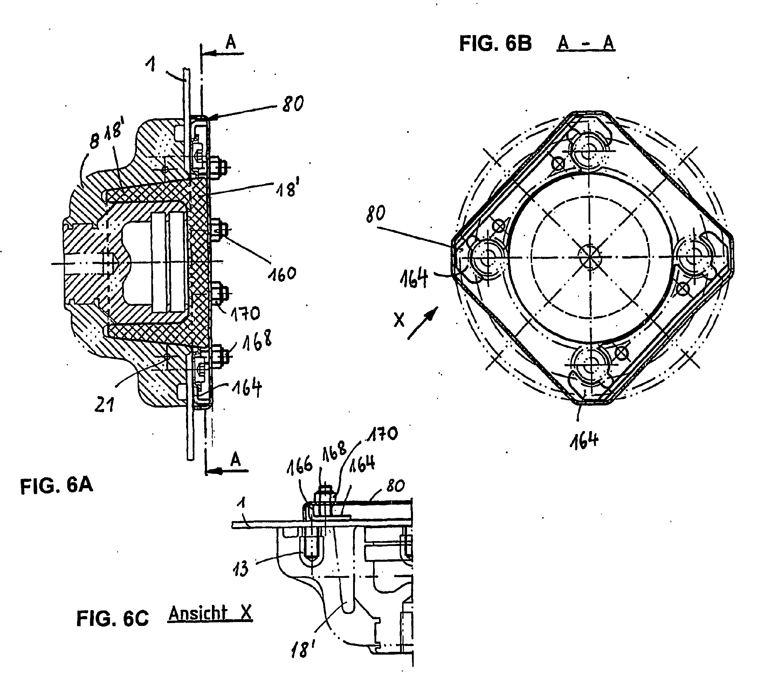

Der Haltedeckel 80 wird zur Befestigung des Verschlußkörpers 18' mit der Schaltfeldwand 1 und zur festen Einpressung in die Dichtspalte 32 des Isolierkörpers verwendet. Der Haltedeckel kann an besonderen, an der Schaltfeldwand 1 vorhandenen Befestigungselementen aufgebracht werden. Wesentlich ist, dass mit der Befestigung und Auflage auf den Verschlußkörper dieser in den Isolierkörper 8 eingepreßt wird. Der erzeugte Druck sollte sich in die Tiefe fortpflanzen, so daß der topfförmige Rand 18.2' des Verschlußkörpers 18' in die Dichtspalte 32 des Isolierkörpers 8 eingepreßt wird. Zur Mon-tage des Haltedeckels werden Kragenbleche 164 verwendet, die in der Beschreibung zu den Figuren 5 und 6 noch näher erläutert werden.

Fig. 3 zeigt die oberflächliche Belegung des ersten Verschlußkörpers 18' mit Leitlack. Wie schon erwähnt, sind die Rundungen am Becherrand 18.2, der flache Becherboden 18'.1 ebenfalls mit dem Randbereich mit Leitbeschichtung 27.1 und der innere Bereich mit Leitbeschichtung 28 versehen. Eine Strecke zwischen den leitfähig beschichten Endabschnitten 18.2 und der äußeren Leitbeschichtung 27.1 bleibt nichtleitend.

In Fig. 4 ist ein zweiter Verschlußkörper 18" in Doppeltopfform zur Verwendung für eine kapazitive Meßanordnung 100 dargestellt. Schematisch ist mit dem Bezugszeichen 102 ein Meßkabel angedeutet. Der Verschlußkörper 18" ist auf der von der Schaltfeldwand 1 abgewandten Seite mit einem umlaufenden Rand, bzw. tellerförmig vertieft ausgebildet. Der umlaufende Außenrand 18".3 dient zur Auflage der Abdeckung (Haltedeckel 80' in zweiter Ausführungsform) der Meßanordnung 100. Der Haltedeckel legt sich auf den Rand der Doppeltopfform 18", wo der Andruck für das Einpressen in die Dichtspalte des Isolierkörpers erzeugbar ist.

In dem Haltedeckel 80' ist die Meßelektrode 100 zur kapazitiven Spannungsmessung integriert. In der tellerförmigen Vertiefung ist als Elektrode eine leitfähige Beschichtung 27" als Folie oder auch aus Leitlack aufgebracht. Die Elektrode 27" reicht nicht bis zum Tellerrand 18".3. Die Tiefe T des Tellers wird so gewählt, daß ein ausreichender Isolationsabstand zwischen der Beschichtung 27" und der Abdeckung 80' vorhanden ist.

Eine Leitbeschichtung 27'.1, die der äußeren Leitbeschichtung 27.1 des ersten Verschlußkörpers 18' entspricht, ist ebenfalls am zweiten Verschlußkörper 18" vorhanden. Sie reicht von der Auflagefläche für die Abdeckung 80' bis in die Ebene, die durch die Schaltfeldwand 1 gebildet wird.

Zur Ausführung einer fehlerfreien Spannungsmessung ist es notwendig, dass die Abdeckung 80' so auf dem Tellerrand 18".3 aufliegt, daß der Innenraum feuchtedicht abgesperrt ist. Die Meßanordnung ist zentrisch mit einem Federkontakt 104 versehen, der gegen die Elektrode in der tellerförmigen Vertiefung preßt.

Nach einer ersten und einfachen Ausführungsform kann ein Haltedeckel unmittelbar an der Schaltfeldwand angebracht werden. Bei einer weiteren ― in Fig. 5A und 5B dargestellten - Ausführungsform wird der Haltedeckel 80' (Fig. 5B) indirekt an den zur Befestigung des Isolierkörpers 8 dienenden Schraubelementen (metallische Hülsen 13 und Schrauben 16) montiert. In die metallischen Hülsen 13 werden Schrauben 160 eingedreht, unter deren Schraubkopf je eine Kragenhülse 162 untergelegt ist. Damit wird ein Freiraum erzeugt, unter den ein Kragenblech 164 einschiebbar ist. Diese Maßnahme kann auch vorgenommen werden, wenn eine Kupplung zwischen zwei Schaftfeldern eingerichtet werden soll. Das spätere Trennen der Schaltfelder und das Verschließen der Öffnungen kann problemlos vorgenommen werden, wenn die Schrauben schon mit Kragenhülse 162 unterlegt worden sind.

Das Kragenblech hat zwei U-förmige Öffnungen 165, die unter die Kragenhülsen 162 gleiten; in Fig. 5A mit den Pfeilen Ri dargestellt. Die den Öffnungen 165 gegenüberliegende Kante ist senkrecht umgekantet (166) und weist in der Einbaulage (eingeschoben unter die Kragenhülsen) von der Schaltfeldwand weg; siehe auch Fig. 2 und 6A. Zwischen den U-förmigen Öffnungen 165 sind auf dem Kragenblech 164 zwei angeschweißte Gewindestehbolzen 168 vorhanden, die ebenfalls die Richtung der Umkantung 166 haben. Die Höhe der Umkantung ist - wie noch ersichtlich - Anschlag für die Auflage des Haltedeckels.

Nach Unterschieben beider Kragenbleche kann auf die abstehenden vier Gewindestehbolzen 168 der Haltedeckel 80' aufgelegt werden, dafür sind im Haltedeckel passend vier Bohrungen 82 vorhanden, die zur Lage der Gewindestehbolzen 168 passen. Mit auf die Gewindestehbolzen aufgesetzten Muttern 170 wird der Haltedeckel angeschraubt, wobei sich der Haltedeckel auf die Umkantung 166 des Kragenblechs anlegt. Mit diesem vorgegebenen Abstand wird auch ein definierter Andruck des Verschlußkörpers 18' in die Dichtspalte 32 des Isolierkörpers erzielt. Wie in der Figur 5B erkennbar, ist das Halteblech ringsum in Richtung Schaltfeldwand umgekantet. Diese Umkantungen dienen der Fixierung der Kragenbleche während des Zusammenbaus.

Der Haltedeckel 80' ist im wesentlichen quadratisch ausgebildet. Eine Ausführungsform des Haltedeckels kann darin bestehen, dass er zur Verwendung mit einer kapazitiven Meßelektrode einsetzbar ist. Hierbei kann der Haltedeckel mit einer zentralen Bohrung 84 ausgebildet sein, durch die zumindest der Meßkabelanschluß 102 des Meßfeldsteckers geführt wird oder Platz für die Elektroden-Anordnung (100) ist.

Die drei Figuren 6A, 6B und 6C stellen den Zusammenbau des ersten Verschlußkörpers 18' im Isolierkörper dar. Fig. 6A entspricht der Fig. 2 mit aufgeschraubtem Haltedeckel 80. Die Einzelheiten der Kragenbleche 164 und der Schrauben 160 sind zuvor schon dargestellt worden. Fig. 6B stellt den Schnitt A-A aus Fig. 6A dar. Die Figur 6B zeigt den Zusammenbau der Einzelteile aus Fig. 5A. Fig. 6C liefert die Ansicht X aus Fig. 6B, mit den schon beschriebenen Einzelheiten.

### Bezugszeichen

- 1: Schaltfeldwand
- 8: Isolierkörper
- 10: Kupplungsbolzen
- 12: Kontaktstück
- 13: Hülsen - Eingießgewinde
- 16: Befestigungsschrauben
- 18: Dichtkörper
- 18.2: Rand in der Dichtspalte
- 18': erster Verschlußkörper in Becherform
- 18'.1: Becherboden
- 18": zweiter Verschlußkörper mit Meßelektrode (Doppeltopfform)
- 18".3: äußerer Becherrand
- 19: Nut im Isolierkörper
- 20: Dichtung
- 21: Elektrode
- 22: Nuten
- 24: Krempe im Raum zwischen den Wänden
- 26: äußere Leitbeschichtung
- 27.1: Leitbeschichtung auf Becherboden außen
- 27": Elektrode
- 28: innere Leitschicht
- 32: Dichtspalte
- 34: Ring gegen Kupplungsbolzen
- 38: Anschrägung (Konus)
- 42: Wulst
- 44: Raum zwischen den Wänden
- 80, 80': Haltedeckel
- 82: Bohrungen
- 84: Innenhohrung
- 100: Meßeinrichtung
- 102: Meßleitung
- 160: Schrauben für Haltedeckel
- 162: Kragenhülse
- 164: Kragenblech
- 165: U-Öffnungen
- 166: Umkantung
- 168: Gewindestehbolzen
- 170: Muttern

## Patentansprüche

1. Elektrische Schaltanlage, insbesondere für Mittelspannung, mit mindestens einer Öffnung in einer Wand **(1)** eines ersten Schaltfefdes für eine Verbindung zu einem zweiten Schaltfeld einer benachbart angeordneten Schaltanlage, mit einem topfförmigen Isolierkörper **(8),** der mit seiner offenen Seite gegen die Innenfläche der Schaltfeldwand **(1)** gerichtet ist,
mit einem innerhalb der Topfform des Isolierkörpers **(8)** befindlichen Kontaktstück **(12)** und mit einer Aufnahmemöglichkeit im Kontaktstück **(12)** für einen Kupplungsbolzen **(10)** zur elektrischen Verbindung zwischen benachbarten Schaltfeldern,
**dadurch gekennzeichnet,**
**dass** in dem Isolierkörper **(8)** Mittel **(13)** zur Befestigung mit der Schaltfeldwand **(1)** integriert sind,
**dass** innerhalb der Topfform des Isolierkörpers **(8)** eine Dichtspalte **(32)** zur Aufnahme eines schaltfeldseitigen Randes (**18.2,18.2'**) eines becherförmigen Dicht- (**18**) oder Verschlußkörpers (**18',18"**) aus Isoliermaterial vorhanden ist,
**dass** der Rand (**18.2,18.2'**) des Dicht- (**18**) oder des Verschlußkörpers (**18',18"**) in die Dichtspalte **(32)** einlegbar ist,
**dass** der Dicht- (**18**) oder der Verschlußkörper (**18'**, **18"**) eine Leitbeschichtung (im folgenden als 'innere Leitbeschichtung' bezeichnet) (**28**) trägt.

2. Schaltanlage nach Anspruch 1, **dadurch gekennzeichnet, dass** die innere Leitbeschichtung **(28)** an der Berührungsfläche zum Kontaktstück (12) ausgebildet ist.

3. Schaltanlage nach Anspruch 2, **dadurch gekennzeichnet, dass** die innere Leitbeschichtung (28) um den Becherrand **(18.2)** des Dicht- **(18)** oder des Verschlußkörpers **(18', 18")** herumgeführt ist, so daß sie die Dichtspalte (**32**) an den Berührungspunkten überall berührt.

4. Schaltanlage nach einem der vorhergehenden Ansprüche, **dadurch gekennzeichnet, dass** die integrierten Befestigungsmittel **(13)** als metallische Hülsen mit Innengewinde gestaltet sind, in die metallische Befestigungsschrauben **(16,160)** eingreifen.

5. Schaltanlage nach einem der vorhergehenden Ansprüche, **dadurch gekennzeichnet, dass** im Isolierkörper **(8)** mit Abstand zur Schaltfeldwandöffnung eine die Schaltfeldwand **(1)** kontaktierende, ringförmige Elektrode **(21)** angeordnet ist, die der Potentialsteuerung zwischen dem Kontaktstück **(12)** und der Schaltfeldwand **(1)** dient.

6. Schaltanlage nach einem der vorhergehenden Ansprüche, **dadurch gekennzeichnet, dass** in dem Isolierkörper (**8**) eine Nut (**19**) für einen Dichtungsring (**20**) gegen die Schaltfeldwand **(1)** eingeformt ist, sowie eine Wulst **(42),** die zur Zentrierung in der Öffnung der Schaltfeldwand **(1)** dient.

7. Schaltanlage nach einem der vorhergehenden Ansprüche, **dadurch gekennzeichnet, dass** der Dichtkörper **(18)** symmetrisch zur Mittelebene zwischen den Schaltfeldem als Doppeltopf ausgebildet ist.

8. Schaltanlage nach dem vorhergehenden Anspruch, **dadurch gekennzeichnet, dass** der Dichtkörper **(18)** eine äußere umlaufende Krempe **(24)** besitzt, die in den Raum **(44)** zwischen den Schaltfeldwänden **(1)** hineinragt.

9. Schaltanlage nach dem vorhergehenden Anspruch, **dadurch gekennzeichnet, dass** auf dem Dichtkörper **(18)** eine äußere Leitbeschichtung (26) vorhanden ist, die die Krempe **(24)** bedeckt und sich bis zur Hälfte des Abstands zwischen der Schaltfeldwand **(1)** und der Elektrode **(21)** erstreckt.

10. Schaltanlage nach einem der Ansprüche 7 bis 9, **dadurch gekennzeichnet, dass** der Dichtkörper **(18)** mit einem umlaufenden Ring **(34)** ausgebildet ist, der den Kupplungsbolzen **(10)** umschließt, soweit dieser von den Kontaktstücken **(12)** nicht umgriffen ist.

11. Schaltanlage nach einem der Ansprüche 1 bis 6, **dadurch gekennzeichnet, dass** der Verschlußkörper (**18',18"**) mit Befestigungsmitteln (**13,160,164**) an der Schaltfeldwand (**1**) anbringbar ist, derart dass ein definierter Einpressdruck des Verschlußkörpers (**18', 18"**) in die Dichtspalte (**32**) des Isolierkörpers (**8**) erzielt wird.

12. Schaltanlage nach dem vorhergehenden Anspruch, **dadurch gekennzeichnet, dass** ein Haltedeckel (**80, 80'**) an den Verschlußkörper (**18',18"**) auflegbar ist, der indirekt an die Befestigungsmittel **(13)** im Isolierkörper **(8)** montierbar ist.

13. Schaltanlage nach Anspruch 12, **dadurch gekennzeichnet, dass** der Verschlußkörper (**18"**) schaltfeldfern mit einem Außenrand (**18".3**) versehen ist, der zur Auflage des Haltedeckels (**80,80'**) dient.

14. Schaltanlage nach einem der vorhergehenden Ansprüche, **dadurch gekennzeichnet, dass** die Außenfläche des Verschlußkörpers (**18"**) mit einer Elektrode (**27"**) für eine kapazitive Meßanordnung (100) bedeckt ist.

15. Schaltanlage nach Anspruch 14, **dadurch gekennzeichnet, dass** in den Haltedeckel (**80**') die kapazitive Meßanordnung (**100**) integriert ist.

16. Schaltanlage nach einem der Ansprüche 14 oder 15, **dadurch gekennzeichnet, dass** der Haltedeckel (**80**') feuchtedicht aufgebracht ist und einen Federkontakt (**104**) für die Meßanordnung (**100**) trägt, der zentrisch die Elektrode (**27**") kontaktiert.

## Claims

1. Electrical switching system, especially for medium voltage, comprising at least one opening in a wall (1) of a first switch panel for a connection to a second switch panel of an adjacent switching system, comprising a cup-shaped insulating body (8), having its open side directed towards the inner surface of the switch panel wall (1),
comprising a contact piece (12) located inside the cup shape of the insulating body (8) and comprising a receiving facility in the contact piece (12) for a coupling bolt (10) for the electrical connection between adjacent switch panels,
**characterised in**
**that** means (13) for fixing to the switch panel wall (1) are integrated in the insulating body (8), that a sealing gap (32) for receiving an edge (18.2, 18.2') on the switch panel side of a cup-shaped sealing (18) or closing body (18', 18") of insulating material is provided inside the cup shape of the insulating body (8),
**that** the edge (18.2, 18.2') of the sealing (18) or the closing body (18', 18") can be inserted in the sealing gap (32),
**that** the sealing (18) or the closing body (18', 18") has a conductive coating (hereinafter designated as "inner conductive coating") (28).

2. The switching system according to claim 1, **characterised in that** the inner conductive coating (28) is constructed on the contact area to the contact piece (12).

3. The switching system according to claim 2, **characterised in that** the inner conductive coating (28) is guided around the cup edge (18.2) of the sealing (18) or the closing body (18', 18") so that the sealing gap (32) is in contact with the contact points at all points.

4. The switching system according to any one of the preceding claims, **characterised in that** the integrated fixing means (13) is configured as metal sleeves as an internal thread into which metal fixing screws 16, 160) engage.

5. The switching system according to any one of the preceding claims, **characterised in that** located in the insulating body (8) at a distance from the switch panel wall opening is an annular electrode (21) in contact with the switch panel wall (1) which is used for controlling the potential between the contact piece (12) and the switch panel wall (1).

6. The switching system according to any one of the preceding claims, **characterised in that** a groove (19) for a sealing ring (20) against the switch panel wall (1) is formed in the insulating body (8) as well as a bead (42) used for centring in the opening of the switch panel wall (1).

7. The switching system according to any one of the preceding claims, **characterised in that** the sealing body (18) is constructed symmetrically to the central plane between the switch panels as a double cup.

8. The switching system according to any one of the preceding claims, **characterised in that** the sealing body (18) has an outer circumferential knuckle (24) which projects into the space (44) between the switch panel walls (1).

9. The switching system according to any one of the preceding claims, **characterised in that** an outer conductive coating (26) is provided on the sealing body (18) which covers the knuckle and extends as far as half the distance between the switch panel wall (1) and the electrode (21).

10. The switching system according to any one of claims 7 to 9, **characterised in that** the sealing body (18) is constructed with a circumferential ring (34) which encloses the coupling bolt (10) insofar as this is not enclosed by the contact pieces (12).

11. The switching system according to any one of claims 1 to 6, **characterised in that** the closing body (18', 18") is attached by means of fixing means (13, 160, 164) to the switch panel wall (1) such that a defined pressing-in pressure of the closing body (18', 18") in the sealing gap (32) of the insulating body (8) is achieved.

12. The switching system according to any one of the preceding claims, **characterised in that** a retaining cover (80, 80') is placed on the closing body (18', 18") which can be mounted indirectly on the fixing means (13) in the insulating body (8).

13. The switching system according to claim 12, **characterised in that** the closing body (18") is provided with an outer edge (18".3) remote from the switch panel which is used to support the retaining cover (80, 80').

14. The switching system according to any one of the preceding claims, **characterised in that** the outer surface of the closing body (18") is covered with an electrode (27") for a capacitive measuring arrangement (100).

15. The switching system according to claim 14, **characterised in that** the capacitive measuring arrangement (100) is integrated in the retaining cover (80').

16. The switching system according to any one of claims 14 or 15, **characterised in that** the retaining cover (80') is attached in a moisture-proof fashion and carries a spring contact (104) for the measuring arrangement 100), which is centrally in contact with the electrode (27").

## Revendications

1. Installation de distribution électrique, en particulier pour moyenne tension, comportant au moins une ouverture dans une paroi (1) d'un premier panneau de commande pour une liaison avec un deuxième panneau de commande d'une installation de distribution disposée au voisinage, avec un corps isolant (8) en forme de pot qui est orienté par son côté ouvert vers la surface intérieure de la paroi (1) du panneau de commande,
comportant une pièce de contact (12) se trouvant à l'intérieur de la forme en pot du corps isolant (8) ainsi qu'une possibilité de recevoir dans la pièce de contact (12) une tige de couplage (10) pour la liaison électrique entre des panneaux de commande voisins,
**caractérisée**
**en ce que** dans le corps isolant (8) sont intégrés des moyens (13) pour la fixation avec la paroi (1) du panneau de commande,
**en ce qu'**à l'intérieur de la forme en pot du corps isolant (8) est prévue une fente d'étanchéité (32) pour recevoir un bord (18.2, 18.2') côté panneau de commande d'un corps d'étanchéité (18) ou corps d'obturation (18', 18") en forme de godet, en un matériau isolant,
**en ce que** le bord (18.2, 18.2') du corps d'étanchéité (18) ou du corps d'obturation (18', 18") peut être placé dans la fente d'étanchéité (32),
**en ce que** le corps d'étanchéité (18) ou le corps d'obturation (18', 18") porte un revêtement conducteur (désigné ci-après par "revêtement conducteur intérieur") (28).

2. Installation de distribution selon la revendication 1, **caractérisée en ce que** le revêtement conducteur intérieur (28) est réalisé sur la surface de contact avec la pièce de contact (12).

3. Installation de distribution selon la revendication 2, **caractérisée en ce que** le revêtement conducteur intérieur (28) est guidé autour du bord du godet (18.2) du corps d'étanchéité (18) ou du corps d'obturation (18', 18"), ce qui fait qu'il est en contact partout aux points de contact avec la fente d'étanchéité (32).

4. Installation de distribution selon l'une des revendications précédentes, **caractérisée en ce que** les moyens de fixation (13) intégrés sont réalisés sous la forme de douilles métalliques avec taraudage, dans lesquelles s'engagent les vis de fixation (16, 160) métalliques.

5. Installation de distribution selon l'une des revendications précédentes, **caractérisée en ce que** dans le corps isolant (8) est disposé, à distance de l'ouverture de la paroi du panneau de commande, une électrode (21) de forme annulaire, en contact avec la paroi (1) du panneau de commande, laquelle électrode sert à la commande du potentiel entre la pièce de contact (12) et la paroi (1) du panneau de commande.

6. Installation de distribution selon l'une des revendications précédentes, **caractérisée en ce que** dans le corps isolant (8) est formée une rainure (19) pour une bague d'étanchéité (20) contre la paroi (1) du panneau de commande, ainsi qu'un bourrelet (42) qui sert au centrage dans l'ouverture de la paroi (1) du panneau de commande.

7. Installation de distribution selon l'une des revendications précédentes, **caractérisée en ce que** le corps d'étanchéité (18) est réalisé sous la forme d'un double pot symétrique par rapport au plan médian passant entre les panneaux de commande.

8. Installation de distribution selon la revendication précédente, **caractérisée en ce que** le corps d'étanchéité (18) possède un rebord (24) périphérique extérieur qui s'engage à l'intérieur de l'espace (44) compris entre les parois (1) des panneaux de commande.

9. Installation de distribution selon la revendication précédente, **caractérisée en ce que** sur le corps d'étanchéité (18) est prévu un revêtement conducteur (26) extérieur qui recouvre le rebord (24) et s'étend jusqu'à la moitié de la distance entre la paroi (1) du panneau de commande et l'électrode (21).

10. Installation de distribution selon l'une des revendications 7 à 9, **caractérisée en ce que** le corps d'étanchéité (18) présente un anneau périphérique (34) qui enferme la tige de couplage (10), si celle-ci n'est pas entourée par les pièces de contact (12).

11. Installation de distribution selon l'une des revendications 1 à 6, **caractérisée en ce que** le corps d'obturation (18', 18") peut être placé par des moyens de fixation (13, 160, 164) sur la paroi (1) du panneau de commande de manière à obtenir une pression définie du corps d'obturation (18', 18") dans la fente d'étanchéité (32) du corps isolant (8).

12. Installation de distribution selon la revendication précédente, **caractérisée en ce qu'**un couvercle de retenue (80, 80') peut être placé sur le corps d'obturation (18', 18") et monté indirectement sur les moyens de fixation (13) dans le corps isolant (8).

13. Installation de distribution selon la revendication 12, **caractérisée en ce que** le corps d'obturation (18") est pourvue à distance du panneau de commande d'un bord extérieur (18".3) qui sert à l'appui du couvercle de retenue (80, 80').

14. Installation de distribution selon l'une des revendications précédentes, **caractérisée en ce que** la surface extérieure du corps d'obturation (18") est recouverte par une électrode (27") pour un dispositif de mesure capacitif (100).

15. Installation de distribution selon la revendication 14, **caractérisée en ce que** dans le couvercle de retenue (80') est intégré le dispositif de mesure capacitif (100).

16. Installation de distribution selon l'une des revendications 14 ou 15, **caractérisée en ce que** le couvercle de retenue (80') est placé de manière étanche à l'humidité et porte un contact à ressort (104) pour le dispositif de mesure (100), lequel est en contact au centre avec l'électrode (27").
